# FASCICULE DE BREVET EUROPEEN

(11) **EP 2 512 782 B1**
(45) Date de publication et mention de la délivrance du brevet: **21.09.2016**
(21) Numéro de dépôt: 10803565.0
(22) Date de dépôt: 16.12.2010
(51) Int. Cl.: B29C 70/32, B29C 70/54, B29C 53/56

(54) **PROCEDES DE FABRICATION D'UNE PIECE EN MATERIAU COMPOSITE OBTENUE PAR DEPOT DE COUCHES DE FIBRES RENFORCANTES PLAQUEES SUR UN MANDRIN**
VERFAHREN ZUR HERSTELLUNG EINES TEILS AUS EINEM MITTELS AUFTRAGUNG VON VERSTÄRKUNGSFASERLAGEN AUF EINEN DORN GEWONNENEN VERBUNDSTOFF
METHOD FOR MANUFACTURING A PART MADE OF A COMPOSITE MATERIAL OBTAINED BY DEPOSITING LAYERS OF REINFORCING FIBERS URGED ONTO A MANDREL

(30) Priorité: 16.12.2009 FR 0906154
(43) Date de publication de la demande: 24.10.2012
(73) Titulaire: Messier-Bugatti-Dowty, 78140 Vélizy-Villacoublay (FR); Aircelle, 76700 Gonfreville l'Orcher (FR)
(72) Inventeur: MASSON, Richard, F-78350 Les Loges en Josas (FR); DUNLEAVY, Patrick, F-91120 Palaiseau (FR); DESJOYEAUX, Bertrand, F-76310 Sainte Adresse (FR)
(74) Mandataire: Beaudouin-Lafon, Emmanuel
(86) Numéro de dépôt international: PCT/EP2010/007659
(87) Numéro de publication internationale: WO 2011/072846

(56) Documents cités:
- EP-A2- 2 116 356
- DE-A1- 4 310 201
- US-A1- 2007 125 487
- US-A1- 2007 272 346

## Description

L'invention concerne la fabrication de pièces en matériau composite obtenues par application sur un mandrin de plusieurs couches de fibres renforçantes. Ces couches peuvent être des couches de fibres de carbone tissées, tressées ou drapées, qui sont solidarisées les unes aux autres, par exemple par injection de résine.

### ARRIERE PLAN DE L'INVENTION

Dans un tel procédé de fabrication qui est par exemple utilisé pour former un bras en matériau composite, le mandrin est une pièce pleine ou creuse, encore appelée noyau. Il constitue principalement un support dont les couches de fibres renforçantes épousent la forme extérieure lorsqu'elles sont appliquées sur celui-ci, pour que la pièce finale ait une géométrie correspondant à une forme souhaitée.

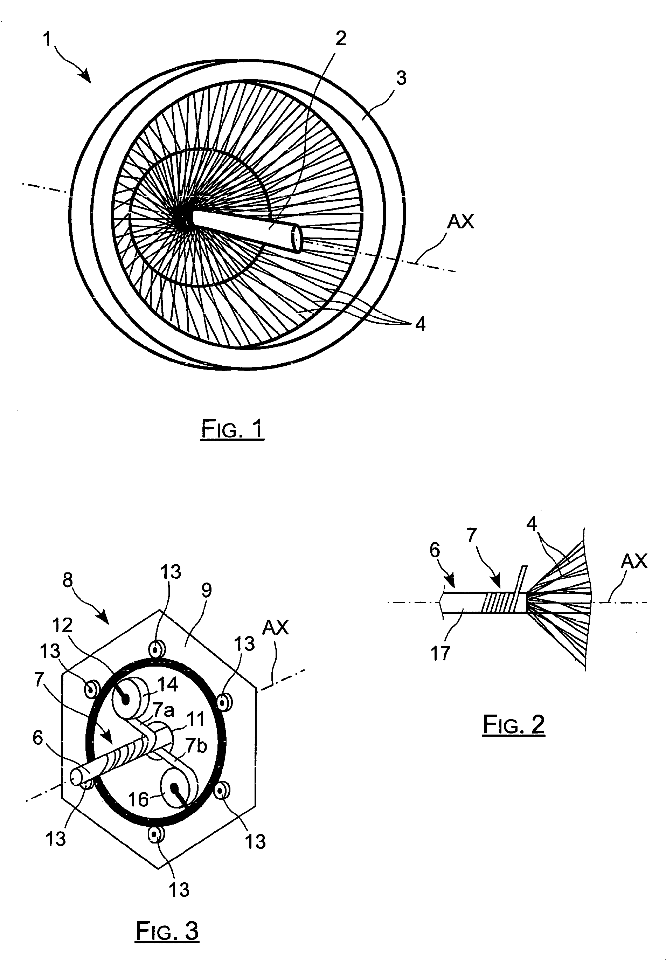

En pratique, les couches de fibres renforçantes peuvent être appliquées sur le mandrin avec une machine de tressage telle que la machine repérée par 1 dans la figure 1.

Le mandrin 2 est alors installé dans la machine à tresser 1 qui comporte essentiellement un anneau 3 portant à sa face arrière une série de bobines de fibre renforçantes. Les fibres renforçantes 4 se rejoignent dans une région située sensiblement sur un axe AX normal à l'anneau 3. Lorsque le cycle de tressage est lancé, le mandrin 2 est déplacé le long de l'axe AX, ce qui provoque le tressage d'une chaussette de fibres qui s'applique à la face externe de ce mandrin 2.

La vitesse du mandrin par rapport à l'anneau est ajustée pour que les fibres soient tressées en étant orientées selon une valeur angulaire prédéterminée telle que soixante degrés par rapport à l'axe AX. Plusieurs passages sont ainsi réalisés pour constituer plusieurs couches de fibres tressées entourant le mandrin.

L'ensemble constitué par le mandrin et les différentes couches de fibres, est ensuite placé dans un moule. De la résine est alors injectée pour imprégner les couches de fibres, après quoi un cycle de cuisson est lancé, pour que l'ensemble constitué par les couches de fibres et la résine constitue un tout rigide.

En pratique, on recherche le meilleur plaquage possible des couches de fibre sur le mandrin qui les porte, de manière à obtenir d'une part une conformité géométrique optimale entre la pièce finie et le mandrin, et d'autre part un taux de fibres renforçantes le plus élevé possible dans la pièce finie, pour que le rapport de la tenue mécanique sur la masse soit optimal.

Le degré de plaquage des couches de fibres tressées sur le mandrin est optimisé en jouant sur le niveau de tension des fibres renforçantes durant l'opération de tressage.

D'une manière générale, le degré de plaquage des couches de fibres sur le mandrin est conditionné par la tension des fibres, par leur orientation par rapport à l'axe AX, et par la vitesse de progression du mandrin le long de l'axe AX.

Dans l'exemple de la figure 1, les couches de fibres renforçantes sont appliquées au cours d'une opération de tressage. Mais selon d'autres procédés, les couches de fibres renforçantes peuvent se présenter sous forme d'un tissu de fibres préfabriqué à imprégner de résine, ou bien sous forme de drapages préimprégné.

Lorsqu'il s'agit de tissus, celui-ci est rapporté par un opérateur en même temps que celui-ci l'imprègne de résine pour le plaquer au mandrin. Lorsqu'il s'agit de drapages préimprégnés, des morceaux sont rapportés sur le mandrin, de manière analogue, par un opérateur, sans qu'il soit nécessaire de procéder à une imprégnation de résine.

Ainsi, dans ces deux derniers exemples, la question du plaquage est essentiellement conditionnée par le savoir faire de l'opérateur installant les couches de fibres renforçantes, de sorte que la maîtrise de ce plaquage est hasardeuse dans un contexte de fabrication industrialisée.

L'art antérieur est notamment illustré par les documents US 2007/272346 A1, US 2007/125487 A1, EP 2 116 356 A2 et DE 43 10 201 A1.

### OBJET DE L'INVENTION

Le but de l'invention est de proposer une solution pour améliorer le plaquage des couches de fibres renforçantes qui sont appliquées sur le mandrin.

### RESUME DE L'INVENTION

A cet effet, l'invention a pour objet des procédés de fabrication d'une pièce en matériau composite selon la revendication 1 et la revendication 9.

### BREVE DESCRIPTION DES FIGURES

Outre la figure 1 déjà décrite, les figures 2 à 11 et 13 à 15 illustrent des modes de réalisation représentant des éléments de l'état de la technique qui sont utiles à la compréhension de l'invention plus particulièrement illustrée à la figure 12.
La figure 1 est une vue d'ensemble illustrant une opération de tressage de fibres de carbone autour d'un mandrin ;
La figure 2 est une vue latérale partielle d'une opération de tressage avec enrubannage ;
La figure 3 est une vue d'ensemble représentant un appareillage pour enrubanner l'ensemble constitué par le mandrin et les couches de fibres qu'il porte ;

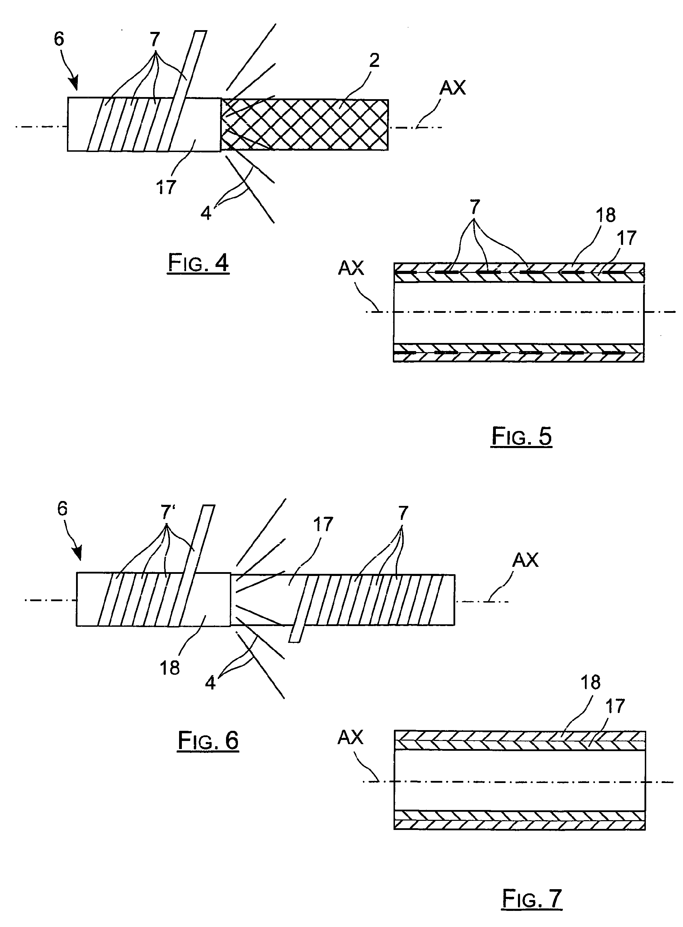

La figure 4 est une vue latérale illustrant schématiquement un premier mode de réalisation ;
La figure 5 est une vue en coupe longitudinale d'une pièce finie illustrant schématiquement la structure multicouche obtenue avec le premier mode de réalisation ;
La figure 6 est une vue latérale illustrant schématiquement un second mode de réalisation ;
La figure 7 est une vue en coupe longitudinale d'une pièce finie illustrant schématiquement la structure multicouche obtenue avec le second mode de réalisation ;

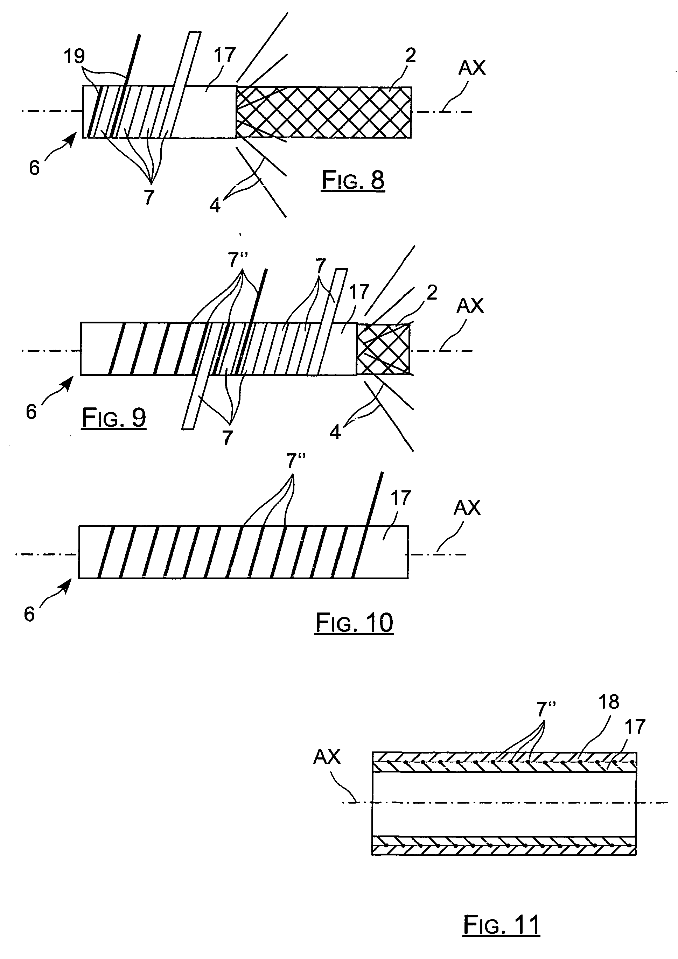

Les figures 8 à 10 sont des vues latérales illustrant schématiquement un troisième mode de réalisation ;
La figure 11 est une vue en coupe longitudinale montrant une pièce finie illustrant schématiquement la structure multicouche selon le troisième mode de réalisation ;

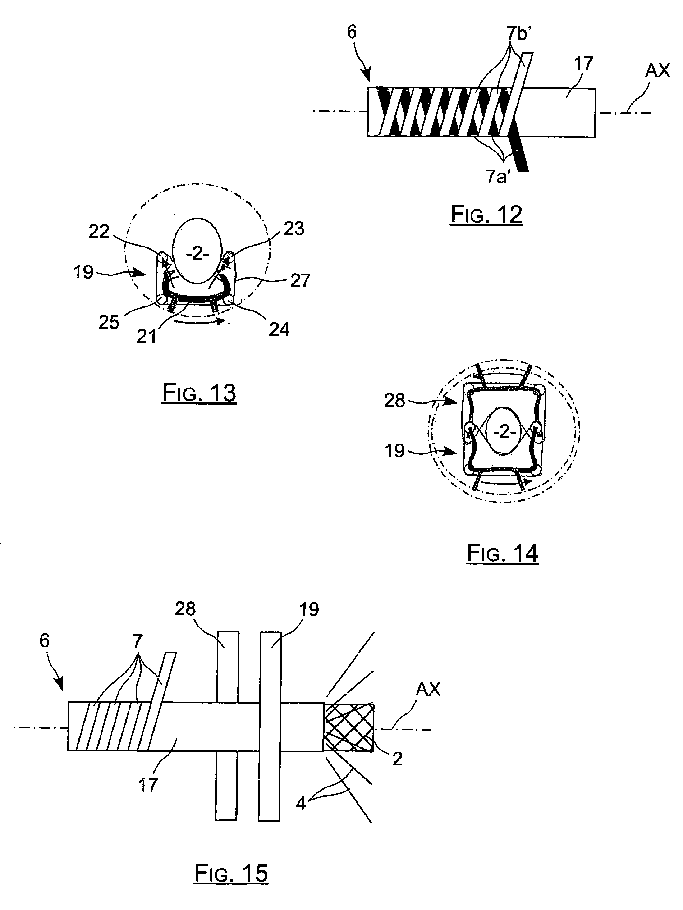

La figure 12 est une vue latérale illustrant schématiquement un mode de réalisation de l'invention à deux rubans enroulés en sens inverse ;
La figure 13 est une vue en coupe transversale schématique d'un appareillage pour mettre en oeuvre une opération de calandrage simple ;
La figure 14 est une vue en coupe transversale schématique d'un appareillage permettant de mettre en oeuvre une opération de calandrage double ;
La figures 15 est une vue latérale montrant schématiquement un mode de réalisation dans lequel le procédé selon l'invention intègre une opération de calandrage préalablement à l'enroulement de liens.

### DESCRIPTION DETAILLEE DE L'INVENTION

L'idée à la base de l'invention est de réaliser le plaquage sur le mandrin par enroulement d'un lien autour des couches de fibres renforçantes, pour simplifier grandement la maîtrise de ce plaquage.

Le mandrin s'étend longitudinalement selon une direction AX, en présentant une section transversale délimitée par un contour fermé pouvant être elliptique, polygonal ou autre. Ce contour délimite d'une manière générale une face latérale du mandrin devant être recouverte de fibres renforçantes en vue de constituer la pièce finale.

Comme illustré schématiquement dans la figure 2, l'opération d'enroulement autour de la ou des couches de fibres portées par le mandrin peut être intégrée à l'opération de tressage de ces couches, de sorte qu'une phase additionnelle séparée n'a pas à être prévue.

Cet enroulement pourrait être assuré de manière manuelle ou bien semi-manuelle, mais il peut avantageusement être mis en oeuvre au moyen d'un appareillage tel que représenté dans la figure 3 en y étant repéré par 8.

Comme visible dans les figures 2 et 3, le lien 7 est entouré autour et le long de l'ensemble 6 constitué par le mandrin et les couches qu'il porte, de sorte qu'il est disposé de manière généralement hélicoïdale, formant des spires consécutives qui sont ici espacées les unes des autres le long de l'axe AX.

Dans l'exemple des figures 2 et 3, le lien 7 a une forme de ruban, c'est-à-dire qu'il présente une section à contour généralement rectangulaire. Ce ruban 7 est alors plaqué à plat sur les couches de fibres renforçantes portées par le mandrin, ce qui optimise le maintien des fibres en évitant que celles-ci ne prennent une forme ondulée et en favorisant au contraire une forme la plus régulière possible pour ces fibres.

L'opération d'enroulement peut être mise en oeuvre avec l'appareillage 8 qui est illustré schématiquement en figure 7, cet appareillage étant alors placé autour de l'axe AX et en avant de l'anneau de tressage 3 qui n'est pas représenté dans la figure 3. Cette disposition permet de réaliser l'enroulement au fur et à mesure qu'une couche de fibres est déposée.

Cet appareillage 8 comprend une platine support 9 présentant une ouverture centrale 11 circulaire centrée sur l'axe AX, et traversée par l'ensemble 6. Cette platine 9 porte un anneau 12 centré sur l'axe AX, au moyen d'un ensemble de six galets repérés par 13 qui l'entourent tout en le portant. Ces galets sont eux mêmes portés par la platine 9 peuvent tourner par rapport à celle-ci, et ils sont régulièrement espacés le long d'un cercle centré sur l'axe AX et ayant un diamètre légèrement supérieur à celui de l'anneau 12.

L'anneau 12 est ainsi engagé à l'intérieur du cercle délimité par les galets 13, et un ou plusieurs de ces galets est motorisé, de manière à provoquer la rotation de cet anneau 12 autour de l'axe AX lorsque la motorisation est activée.

Comme visible dans la figure 3, cet anneau 12 porte également deux bobines 14 et 16 situées de manière à être diamétralement opposées par rapport à l'axe AX, chaque bobine étant apte à tourner autour d'un axe parallèle à l'axe AX, et par rapport à l'anneau 12 qui les porte.

En fonctionnement, et comme le montre schématiquement la figure 3, l'anneau 12 est mis en rotation par le ou les galets motorisés, en même temps que l'ensemble 6 constitué par le mandrin et les couches de fibres tressées qu'il porte est déplacé le long de l'axe AX, de sorte que les deux rubans 7a et 7b se déroulent respectivement des bobines 14 et 16 pour s'enrouler de manière hélicoïdale autour de la couche de fibres qui est en train d'être déposée sur l'ensemble 6.

L'appareillage de la figure 3 permet d'enrouler simultanément deux rubans dans le même sens, qui sont ici repérés par 7a et 7b, mais il peut aussi bien être utilisé pour enrouler un seul ruban 7, dès lors que cet appareil serait équipé d'une bobine 14 unique.

Comme représenté schématiquement dans la figure 4, le ruban 7 peut être enroulé autour d'une première couche 17 de fibres renforçantes 4 appliquées autour du mandrin 2 par la machine de tressage. Une fois que cette première couche 17 a été appliquée et que le ruban 7 a été enroulé autour de celle-ci, une nouvelle couche 18 de fibres renforçantes 4 peut être appliquée autour de l'ensemble, c'est-à-dire par dessus la couche 17 et le ruban 7 qui l'entoure.

Dans la structure résultante, comme visible dans la figure 5, les deux couches 17 et 18 sont superposées l'une à l'autre, alors que le ruban 7 reste interposé entre ces deux couches au niveau de leur jonction.

Comme on le comprend, il peut alors être avantageux d'utiliser un ruban 7 constitué de fibres de même nature que les fibres renforçantes des couches 17 et 18, pour obtenir une cohésion satisfaisante entre ces deux couches, après injection de la résine.

Selon un autre mode de mise en oeuvredu procédé, un ruban 7 est bobiné autour de la couche 17 de fibres renforçantes pour la plaquer sur le mandrin 2, mais ce ruban est retiré au fur et à mesure qu'est appliquée la nouvelle couche 18 de fibres tressées.

Comme illustré schématiquement sur la figure 6, un autre ruban repéré par 7' est bobiné autour de la nouvelle couche 18 de fibres renforçantes au fur et à mesure que cette dernière est tressée autour de l'ensemble constitué par le mandrin et la première couche de fibres renforçantes 17.

Selon le cas, le ruban extérieur 7' peut être laissé en place, ou bien retiré, comme dans le cas de la figure 7 illustrant la structure résultante du procédé de la figure 6 lorsque ce ruban extérieur a été retiré.

Comme visible sur la figure 7, grâce au retrait du premier ruban 7 avant application de la seconde couche tressée 18, les deux couches tressées sont directement en appui l'une sur l'autre, de sorte que leur cohésion est optimale une fois que la résine a été injectée et cuite.

Il est également possible, comme dans l'exemple des figures 8 à 11 de bobiner non pas uniquement un ruban 7 autour de la couche de fibres 17, mais d'enrouler un ruban 7 et un fil 7'', dans le même sens, de manière à laisser le fil 7'' en place lorsque le ruban 7 est retiré au moment de l'application de la seconde couche de fibres renforçantes 18. Le fil 7'' peut, selon le cas, être bobiné en même temps que le ruban, ou bien être bobiné ensuite, dans les espaces séparant les spires consécutives du ruban 7.

Le ruban 7 permet ainsi de réaliser à proprement parler le plaquage de la couche 17 sur le mandrin 2, et le lien 7'' en forme de fil a lui pour fonction de maintenir ce plaquage après retrait du ruban 7.

Dans ces conditions, le retrait du ruban 7 avant application de la couche supplémentaire 18, ce qui correspond à la figure 9, ne risque pas de provoquer un relâchement du plaquage des couches 17 sur le mandrin.

Il s'ensuit que dans la pièce terminée, seul le fil 7 " subsiste, ce qui confère à la fois une garantie d'un plaquage satisfaisant de la couche intérieure 17, et une garantie d'une bonne cohésion des couches 17 et 18 l'une avec l'autre du fait que le fil 7'' interposé entre ces couches présente une surface qui est négligeable vis-à-vis de la totalité de la surface de jonction de ces deux couches, ce qui apparaît dans la figure 11.

Afin d'assurer que l'enroulement du ruban 7 autour de la ou des couches de fibres renforçantes tressées ne perturbe pas l'orientation de ces fibres par rapport à l'axe AX, et selon l'invention, on enroule deux rubans en sens inverse, comme illustré schématiquement en figure 12.

Dans ce cas, l'effet de torsion exercé par l'un des rubans sur la couche de fibres renforçantes est compensé par l'effet de torsion opposé qu'exerce le second ruban bobiné dans l'autre sens, de sorte que la tension circonférentielle s'équilibre.

Les deux rubans qui sont repérés par 7a' et 7b' sont alors enroulés par exemple au moyen de deux appareillages tels que celui de la figure 3 qui sont alors montés l'un devant l'autre, en avant de la machine de tressage 1. Dans ce cas, chaque appareillage porte alors une unique bobine de ruban, et les anneaux de ces deux appareillages sont pilotés pour tourner en sens inverse autour de l'axe AX.

Dans ces conditions, on minimise la déviation des fibres des couches renforçantes provoquée par l'opération d'enroulement de rubans.

Il est à noter que le mode de réalisation de la figure 12 n'exclut pas la possibilité d'enrouler également un fil, pour permettre de retirer les deux rubans avant application d'une couche de fibres renforçantes supplémentaires, sans risque de provoquer un relâchement de la couche 17.

Dans ce cas, le fil est bobiné avec le ruban 7a' qui est situé sous le ruban 7b', de sorte qu'il est alors possible de retirer d'abord le ruban 7b', puis le ruban 7a', tout en laissant le fil en place.

L'amélioration du plaquage des couches de fibres renforçantes, peut aussi être réalisé par une opération dite de calandrage rotatif de la ou des couches de fibres renforçantes, comme illustré schématiquement sur les figures 13 à 15.

On prévoit alors, comme illustré en figure 13, un appareillage de calandrage rotatif, repéré par 19, et comprenant un châssis 21 monté pour tourner autour de l'axe AX, ce châssis 21 étant par exemple porté par un appareillage du type de celui de la figure 3, en étant rigidement solidaire de l'anneau de cet appareillage.

Ce châssis 21 porte un ensemble de quatre galets 22, 23, 24 et 25 situés dans un même plan normal à l'axe AX, et autour desquels est engagée une courroie, repérée par 27 et formant organe de plaquage. Une portion de cette courroie 27 est ainsi en appui latéral sur l'ensemble 6 constitué par le mandrin 2 et les couches de fibres renforçantes qu'il porte, de manière à exercer sur ces couches un effort orienté radialement par rapport à l'axe AX.

Ainsi, lorsque le châssis 21 tourne autour de l'axe AX, la portion de courroie qui est en appui latéral sur l'ensemble 6 tourne autour de l'axe AX, mais sans générer de tension circonférentielle sur la couche 17, du fait que cette courroie tourne simultanément autour des galets 22 à 25, et donc autour d'un axe parallèle à l'axe AX.

Un ou plusieurs des différents galets 22 à 25 peuvent être montés sur un système donnant à cette courroie mobile une certaine élasticité par rapport au châssis selon la direction radiale. A cet effet, l'appareillage comprend des moyens de rappel tels que des ressorts, pour réguler la tension de la courroie, c'est-à-dire les efforts exercés radialement par la courroie à l'ensemble constitué par le mandrin et les couches qu'il porte.

Complémentairement, et comme illustré sur la figure 14, un autre appareillage de calandrage 28 peut être prévu en étant espacé de l'appareillage 19 le long de l'axe AX, cet autre appareillage de calandrage 28 étant actionné pour tourner en sens inverse de l'appareillage 19 autour de l'axe AX.

Avec une telle opération de calandrage double, on assure d'une part une grande progressivité du plaquage de la tresse 17 sur le mandrin 2 ou sur les autres couches portées par ce mandrin, et d'autre part on réduit encore significativement la contrainte circonférentielle appliquée à la couche 17 du fait que les deux appareillages de calandrage 19 et 28 ont des effets antagonistes quant à cette contrainte circonférentielle.

Le calandrage des couches tressées est réalisé au moyen de courroies, mais il pourrait aussi être réalisé directement au moyen de roues ou galets par un châssis rotatif tout en étant directement appliqués radialement contre les couches tressées que porte le mandrin.

Une opération de calandrage peut être appliquée après application de chaque couche tressée sur le mandrin, après application de plusieurs couches, ou encore après application de l'ensemble des couches.

Par ailleurs, dans l'exemple des figures, la ou les opérations de calandrage sont mises en oeuvre au fur et à mesure qu'une couche de fibres renforçantes est déposée, ce qui permet de la plaquer immédiatement.

La ou les opérations de calandrage peuvent être mises en oeuvre soit seules, soit en combinaison avec les opérations d'enroulement de liens autour des couches tressées.

Lorsque les opérations de calandrage sont mises en oeuvre seules, on prévoit par exemple de calandrer chaque couche tressée autour du mandrin, avant d'installer l'ensemble constitué par le mandrin et les couches qu'il porte dans un moule pour y injecter la résine et pour polymériser cette résine.

Lorsque les opérations de calandrage sont mises en oeuvre en combinaison avec des opérations d'enroulement de liens ou de rubans, elles permettent d'augmenter encore la qualité de plaquage des fibres tressées sur le mandrin, au moyen d'une installation telle que représentée schématiquement en figure 15.

Dans ce cas, après tissage d'une ou plusieurs couches autour du mandrin, on réalise une opération de calandrage simple ou double avant application d'un lien autour des couches tissées. Ce lien peut être laissé ou retiré avant fabrication d'une autre couche tissée autour de l'ensemble.

A cet effet, l'installation de la figure 15 comporte, le long de l'axe AX, d'abord une machine de tressage, puis les deux appareillages de calandrage 21 et 28 et ensuite un ou deux appareillages pour enrouler des rubans sur l'ensemble 6.

Ces différents appareillages sont espacés les uns des autres le long de l'axe AX, de sorte que le tressage et l'application de la couche de fibres renforçantes, son calandrage sur le mandrin 2, et l'enroulement d'un ou plusieurs liens sont réalisés dans une même phase durant laquelle l'ensemble 6 est déplacé le long de l'axe AX.

D'une manière générale, il convient de noter que les exemples représentés sur les figures montrent des situations dans lesquelles la pièce en matériau composite est formée d'une première et d'une seconde couche.

Cependant, le procédé s'applique aussi bien à des pièces comportant un nombre beaucoup plus important de couches de fibres renforçantes. Dans ce cas, l'enroulement d'un ruban et/ou d'un fil peut selon le cas être réalisé pour plaquer une seule couche vers le mandrin, mais il peut aussi bien être mis en oeuvrepour plaquer conjointement un ensemble de couches de fibres renforçantes appliquées par plusieurs passes de la machine de tressage.

Par ailleurs, les liens utilisés, c'est-à-dire les rubans et les fils enroulées autour de la pièce en cours de fabrication peuvent selon le cas être fabriqués dans les mêmes fibres que les fibres utilisées pour constituer les couches renforçantes elles-mêmes, à savoir typiquement de fibres de carbone, ou dans un matériau différent.

Lorsque le lien ou le ruban considéré doit être laissé en place, il est avantageux de le prévoir fabriqué avec les mêmes fibres que celles utilisées pour tresser les couches de fibres renforçantes. Mais lorsque le fil ou le ruban doit être retiré durant le procédé de fabrication, des matériaux autres que des fibres du même type que celles utilisées pour les couches tressées peuvent également être utilisés.

## Revendications

1. Procédé de fabrication d'une pièce en matériau composite dans lequel on applique sur un mandrin (2) s'étendant selon une direction longitudinale (AX) et présentant une section transversale délimitée par un contour fermé, une ou des couches (17, 18) de fibres renforçantes (4) tressées ou tissées ou encore drapées, **caractérisé en ce qu'**il comporte, après application d'une ou plusieurs couches (17) sur le mandrin (2), une opération d'application d'au moins deux liens (7, 7a, 7b, 7', 7a', 7b', 7') enroulés en hélicoïde en sens inverse autour et le long de l'ensemble (6) constitué par le mandrin (2) et chaque couche (17) de fibres renforçantes (4) qu'il porte, pour enserrer chaque couche (17) de fibres renforçantes contre ce mandrin (2).

2. Procédé selon la revendication 1, dans lequel on utilise au moins un lien (7, 7a, 7b, 7', 7a', 7b') ayant une forme de ruban, en le disposant à plat sur les couches (17) de fibres renforçantes portées par le mandrin (2).

3. Procédé selon la revendication 1 ou 2, dans lequel les spires consécutives de chaque lien (7, 7a, 7b, 7', 7a', 7b', 7'') enroulé sont espacées les unes des autres.

4. Procédé selon l'une des revendications 1 à 3, dans lequel on applique une nouvelle couche (18) de fibres renforçantes par dessus une ou des couches (17) sur laquelle ou lesquelles des liens (7, 7a, 7b, 7', 7a', 7b', 7'') ont été enroulés, et dans lequel au moins un lien (7, 7a, 7b, 7', 7a', 7b') qui a été enroulé est déroulé pour le retirer au fur et à mesure que la ou les nouvelles couches (18) sont appliquées.

5. Procédé selon l'une des revendications 1 à 4, dans lequel l'opération d'enroulement comprend d'une part l'enroulement d'un lien (7, 7a, 7b, 7', 7a', 7b') en forme de ruban, et d'autre part l'enroulement d'un lien (7'') en forme de fil.

6. Procédé selon la revendication 5, dans lequel le lien en forme de ruban (7, 7a, 7b, 7', 7a', 7b') est retiré avant application d'une nouvelle couche (18) de fibres renforçantes.

7. Procédé selon l'une des revendications précédentes, dans lequel au moins un lien (7, 7a, 7b, 7', 7a', 7b', 7") enroulé sur l'ensemble (6) constitué par le mandrin (2) et les couches de fibres renforçantes (17) qu'elle porte est constitué de fibres de même nature que les fibres renforçantes (4) des couches (17, 18) appliquées sur le mandrin (2).

8. Procédé selon l'une des revendications précédentes, dans lequel au moins un lien (7, 7a, 7b, 7', 7a', 7b', 7'') est enroulé autour et le long de l'ensemble (6) au fur et à mesure qu'une couche de fibres renforçantes est déposée sur l'ensemble (6).

9. Procédé de fabrication d'une pièce en matériau composite dans lequel on applique sur un mandrin (2) s'étendant selon une direction longitudinale (AX) et présentant une section transversale délimitée par un contour fermé, une ou des couches (17, 18) de fibres renforçantes (4) tressées ou tissées ou encore drapées, avant d'injecter de la résine dans ces couches et de polymériser cette résine, **caractérisé en ce qu'**il comporte avant injection de la résine, une ou des opérations de plaquage de chaque couche de fibres renforçantes (17) contre le mandrin (2), chaque opération étant assurée avec deux appareillages tournant en sens inverse, chaque appareillage (19, 28) comprenant un châssis (21) tournant autour du mandrin (2) et portant un organe de plaquage (27) appliqué au moins en partie radialement contre l'ensemble formé par le mandrin (2) et chaque couche (17, 18) qu'il porte tout en étant libre de tourner par rapport au châssis (21) et autour d'un axe parallèle à la direction longitudinale (AX), pour exercer sur chaque couche (17) à plaquer un effort de plaquage orienté radialement par rapport à la direction longitudinale (AX).

10. Procédé selon la revendication 9, dans lequel chaque organe de plaquage (27) est une courroie (27) engagée autour d'un ensemble de galets (22, 25) portés par un châssis (21), une portion de cette courroie étant latéralement en appui sur une partie de l'ensemble (6) constitué par le mandrin (2) et chaque couche (17) qu'il porte.

11. Procédé selon l'une des revendications 1 à 10 11, dans lequel au moins une opération de plaquage de couches (17, 18) de fibres renforçantes est mise en oeuvre au fur et à mesure qu'une couche (17, 18) de fibres renforçantes est déposée sur l'ensemble (6).

## Patentansprüche

1. Verfahren zur Verstellung eines Teils aus einem Verbundwerkstoff, wobei man auf einen Dorn (2), der sich in einer Längsrichtung (AX) erstreckt und einen Querschnitt aufweist, der von einer geschlossenen Kontur begrenzt ist, eine oder mehr Schichten (17, 18) aus geflochtenen oder gewebten oder auch umhüllenden Verstärkungsfasern (4) aufbringt, **dadurch gekennzeichnet, dass** es nach dem Aufbringen einer oder mehrerer Schichten (17) auf den Dorn (2) einen Aufbringvorgang zum Aufbringen von mindestens zwei Bändern (7, 7a, 7b, 7', 7a', 7b', 7") umfasst, die gegenläufig schraubenförmig um die und entlang der Einheit (6) gewickelt werden, die von dem Dorn (2) und jeder Schicht (17) aus Verstärkungsfasern (4), die er trägt, gebildet ist, um jede Schicht (17) aus Verstärkungsfasern gegen diesen Dorn (2) zu umschlingen.

2. Verfahren nach Anspruch 1, wobei man mindestens ein Band (7, 7a, 7b, 7', 7a', 7b') in Form eines Streifens verwendet, indem man es flach auf den Schichten (17) aus Verstärkungsfasern, die von dem Dorn (2) getragen werden, anordnet.

3. Verfahren nach Anspruch 1 oder 2, wobei die aufeinanderfolgenden Bindungen jedes herumgewickeiten Bandes (7, 7a, 7b, 7', 7a', 7b') zueinander beabstandet sind.

4. Verfahren nach einem der Ansprüche 1 bis 3, wobei man eine neue Schicht (18) aus Verstärkungsfasern über einer oder mehr Schichten (17), um die die Bänder (7, 7a, 7b, 7', 7a', 7b', 7") herumgewickelt wurden, aufbringt, und wobei mindestens ein Band (7, 7a, 7b, 7', 7a', 7b'), das herumgewickelt wurde, abgewickelt wird, um es in dem Maße, wie die neue bzw. die neuen Schichten (18) aufgebracht werden, zu entfernen.

5. Verfahren nach einem der Ansprüche 1 bis 4, wobei der Umwicklungsvorgang einerseits das Herumwickeln eines Bandes (7, 7a, 7b, 7', 7a', 7b') in Form eines Streifens und andererseits das Herumwickeln eines Bandes (7") in Form eines Fadens umfasst.

6. Verfahren nach Anspruch 5, wobei das streifenförmige Band (7, 7a, 7b, 7', 7a', 7b') vor dem Aufbringen einer neuen Schicht (18) aus Verstärkungsfasern entfernt wird.

7. Verfahren nach einem der vorhergehenden Ansprüche, wobei mindestens ein Band (7, 7a, 7b, 7', 7a', 7b', 7"), das um die Einheit (6) herumgewickelt ist, die aus dem Dorn (2) und den Schichten (17) aus Verstärkungsfasern, die er trägt, gebildet ist, aus Fasern gleicher Art wie die Verstärkungsfasern (4) der auf den Dorn (2) aufgebrachten Schichten (17, 18) gebildet ist.

8. Verfahren nach einem der vorhergehenden Ansprüche, wobei mindestens ein Band (7, 7a, 7b, 7', 7a', 7b', 7") um die und entlang der Einheit (6) in dem Maße, wie eine Schicht aus Verstärkungsfasern auf die Einheit (6) aufgebracht wird, gewickelt wird.

9. Verfahren zur Herstellung eines Teils aus einem Verbundwerkstoff, wobei man auf einen Dorn (2), der sich in einer Längsrichtung (AX) erstreckt und einen Querschnitt aufweist, der von einer geschlossenen Kontur begrenzt ist, eine oder mehr Schichten (17, 18) aus geflochtenen oder gewebten oder auch umhüllenden Verstärkungsfasern (4) aufbringt, ehe man Harz in diese Schichten einspritzt und man dieses Harz polymerisiert, **dadurch gekennzeichnet, dass** es vor dem Einspritzen des Harzes einen oder mehr Plattierungsvorgänge zum Plattieren jeder Schicht (17) aus Verstärkungsfasern auf den Dorn (2) umfasst, wobei jeder Vorgang mit zwei sich in entgegengesetzte Richtung drehenden Einrichtungen sichergestellt wird, wobei jede Einrichtung (19, 28) ein Gestell (21) umfasst, das sich um den Dorn (2) dreht und ein Plattierungsorgan (27) trägt, das zumindest teilweise radial auf die Einheit aufgebracht wird, die aus dem Dorn (2) und jeder Schicht (17, 18), die er trägt, gebildet ist, während es sich relativ zum Gestell (21) und um eine Achse, die parallel zur Längsrichtung (AX) ist, frei drehen kann, um auf jede zu plattierende Schicht (17) eine Plattierungskraft auszuüben, die in Bezug auf die Längsrichtung (AX) radial ausgerichtet ist.

10. Verfahren nach Anspruch 9, wobei jedes Plattierungsorgan (27) ein Riemen (27) ist, der um eine Gruppe aus Rollen (22, 25) gespannt ist, die von einem Gestell (21) getragen werden, wobei ein Abschnitt dieses Riemens seitlich in Anlage an einem Teil der Einheit (6) ist, die aus dem Dorn (2) und jeder Schicht (17), die er trägt, gebildet ist.

11. Verfahren nach einem der Ansprüche 1 bis 10, wobei mindestens ein Plattierungsvorgang zum Plattieren von Schichten (17, 18) aus Verstärkungsfasern in dem Maße, wie eine Schicht (17, 18) von Verstärkungsfasern auf die Einheit (6) aufgebracht wird, durchgeführt wird.

## Claims

1. Method of fabricating a composite material part in which one or more layers (17, 18) of reinforcing fibres (4) that are braided or woven or else draped are applied onto a mandrel (2) that extends in a longitudinal direction (AX) and that presents a cross-section that is defined by a closed outline, **characterized in that** it includes, after applying one or more layers (17) on the mandrel (2), an operation of applying at least two ties (7, 7a, 7b, 7', 7a', 7b', 7") that are wound helically in opposite directions around and along the assembly (6) constituted by the mandrel (2) and each layer (17) of reinforcing fibres (4) that it carries, in order to press each layer (17) of reinforcing fibres against said mandrel (2).

2. Method according to claim 1, wherein at least one tie (7, 7a, 7b, 7', 7a', 7b') in the form of a tape is used and is placed flat against the layers (17) of reinforcing fibres carried by the mandrel (2).

3. Method according to claim 1 or 2, wherein the consecutive turns of each wound tie (7, 7a, 7b, 7', 7a', 7b', 7") are spaced apart from one another.

4. Method according to any one of claims 1 to 3, wherein a new layer (18) of reinforcing fibres is applied over one or more layers (17) on which at least one tie (7, 7a, 7b, 7', 7a', 7b`, 7") has been wound, and wherein at least one tie (7, 7a, 7b, 7', 7a', 7b') that has been wound is unwound so as to be removed progressively as the new layer(s) (18) is/are applied.

5. Method according to any one of claims 1 to 4, wherein the winding operation comprises on the one hand winding a tie (7, 7a, 7b, 7', 7a', 7b') in the form of a tape and on the other hand winding a tie (7") in the form of a yarn.

6. Method according to claim 5, wherein the tie in the form of a tape (7, 7a, 7b, 7', 7a', 7b') is removed before applying a new layer (18) of reinforcing fibres.

7. Method according to any one of the preceding claims, wherein at least one tie (7, 7a, 7b, 7', 7a', 7b', 7") wound on the assembly (6) constituted by the mandrel (2) and the layers of reinforcing fibres (17) that it carries is constituted by fibres of the same kind as the reinforcing fibres (4) of the layers (17, 18) applied against the mandrel (2).

8. Method according to any one of the preceding claims, wherein at least one tie (7, 7a, 7b, 7', 7a', 7b', 7") is wound around and along the assembly (6) progressively as a layer of reinforcing fibres is being deposited on the assembly (6).

9. Method of fabricating a composite material part in which one or more layers (17, 18) of reinforcing fibres (4) that are braided or woven or else draped are applied onto a mandrel (2) that extends in a longitudinal direction (AX) and that presents a cross-section that is defined by a closed outline, prior to injecting resin into said layers and polymerizing said resin, **characterized in that** it includes, prior to injecting the resin, one or more operations of pressing each layer (17) of reinforcing fibres against the mandrel (2), each operation being performed by two apparatus rotating in opposite directions, each apparatus (19, 28) having a frame (21) rotating about the mandrel (2) and carrying a presser member (27) applied at least in part radially against the assembly formed by the mandrel (2) and each layer (17, 18) that it carries, while being free to rotate relative to the frame (21) and around an axis parallel to the longitudinal direction (AX) so as to exert a pressing force against each layer (17) that is to be pressed down, which force is oriented radially relative to the longitudinal direction (AX).

10. Method according to claim 9, wherein each presser member (27) is a belt (27) engaged around a set of wheels (22, 25) carried by a frame (21), a portion of said belt being pressed laterally against a portion of the assembly (6) constituted by the mandrel (2) and each layer (17) that it carries.

11. Method according to any one of claims 1 to 10, wherein at least one operation of pressing layers (17, 18) of reinforcing fibres is implemented progressively as a layer (17, 18) of reinforcing fibres is being deposited on the assembly (6).
